# FASCICULE DE BREVET EUROPEEN

(11) **EP 3 592 576 B1**
(45) Date de publication et mention de la délivrance du brevet: **06.01.2021**
(21) Numéro de dépôt: 18714562.8
(22) Date de dépôt: 01.03.2018
(51) Int. Cl.: B60C 11/24

(54) **PNEUMATIQUE COMPRENANT AU MOINS UN INDICATEUR D'USURE**
REIFEN MIT VERSCHLEISSANZEIGER
TIRE COMPRISING A WEAR INDICATOR

(30) Priorité: 08.03.2017 FR 1770222
(43) Date de publication de la demande: 15.01.2020
(73) Titulaire: COMPAGNIE GENERALE DES ETABLISSEMENTS MICHELIN, 63000 Clermont-Ferrand (FR)
(72) Inventeur: CARENTZ, Hélène, 63040 Clermont-Ferrand Cedex 9 (FR); DEBORDEAUX, Héloïse, 63040 Clermont-Ferrand Cedex 9 (FR)
(74) Mandataire: Demaure, Pierre-Yves
(86) Numéro de dépôt international: PCT/FR2018/050480
(87) Numéro de publication internationale: WO 2018/162822

(56) Documents cités:
- WO-A1-02/100629
- FR-A1- 2 253 640

## Description

### DOMAINE TECHNIQUE DE L'INVENTION

**La** présente invention concerne un pneumatique comprenant une bande de roulement, au moins une rainure, au moins un témoin d'usure disposé dans la rainure, et comprenant par ailleurs au moins un indicateur d'usure.

### ETAT DE LA TECHNIQUE ANTERIEURE

On sait que la bande de roulement d'un pneumatique subit une usure résultant du roulage du pneumatique. Si la bande de roulement est pourvue de rainures, cette usure a comme effet de réduire la profondeur des rainures, dégradant ainsi la performance du pneumatique sur sol mouillé. Arrivé à un certain taux d'usure, le pneumatique ne permet plus de rouler dans des conditions optimales de sécurité. On procède alors à un remplacement du pneumatique ou de sa bande de roulement (« rechapage ») ou, si l'épaisseur restante de la bande de roulement le permet, à un recreusage des rainures de la bande de roulement.

**Le** taux d'usure de la bande de roulement peut être suivi par une mesure de la profondeur des rainures, mais cette opération nécessite un outil de mesure adapté, ce qui lui confère une certaine lourdeur. Il a donc été proposé depuis longtemps de placer des indicateurs d'usure sur la surface de roulement pour alerter visuellement le conducteur du véhicule lorsque la profondeur minimale des rainures de la bande de roulement était atteinte. Ce témoin est typiquement disposé dans les rainures des pneumatiques. Ainsi lorsque les sculptures de la bande de roulement se situent à la même hauteur que les témoins d'usure, (soit par exemple, en Europe, au minimum à 1,6 millimètres de hauteur par rapport au fond de sillon), il convient de remplacer le ou les pneumatiques.

**Le** témoin d'usure est installé en fond de sillons et se présente généralement sous forme rectangulaire. Il doit être visible non seulement pour l'utilisateur, mais également pour les tiers, par exemple dans le but de permettre de contrôler la conformité des témoins d'usure à la législation. Il est donc important de disposer de repères visuels efficaces et fiables pour permettre de localiser les témoins d'usure de façon simple et rapide. Dans certains cas, les témoins d'usure de certains pneumatiques de véhicules de tourisme, en particulier les modèles dont le châssis est surabaissé, sont moins visibles dans la mesure où des éléments de carrosserie recouvrent la partie haute des pneumatiques. Dans cette situation, le témoin d'usure devient moins visible. L'utilisateur peut alors identifier l'emplacement du témoin d'usure en se référant à un repère situé en zone d'épaule. Un tel repère peut être constitué par le symbole bien connu « TWI » (signifiant en anglais « Tire Wear Indicator », ou en français : indicateur de témoin d'usure), ou tout autre symbole aisément reconnaissable par les utilisateurs.

Pour faciliter la localisation du témoin d'usure, l'usage de compositions caoutchouteuses de couleur a souvent été envisagé : à titre d'exemple, le document FR 1 480 472 prévoit une bande de roulement incorporant des matériaux en couleurs, contrastant avec celles du pneumatique, qui apparaissent quand a été atteinte la limite d'usure permise pour les bandes de roulement. Le document FR 797 713 propose d'incorporer dans la bande de roulement un bouchon de caoutchouc, le bouchon étant divisé diagonalement en deux parties de couleur différente. Au fur et à mesure de l'usure de la bande de roulement, la répartition des couleurs visibles en surface change ; lorsque la partie visible du bouchon a complètement changé de couleur, le pneumatique est à remplacer. Le document US 4 226 274 montre un exemple plus récent de la mise en œuvre du même principe. L'utilisation de compositions caoutchouteuses de couleur a cependant un certain nombre d'inconvénients, notamment au niveau de la complexité et du coût du procédé de fabrication ; le positionnement précis dans la bande de roulement est difficile à assurer. De plus, des inserts de compositions caoutchouteuses de couleur peuvent constituer des zones d'usure irrégulière.

Il est possible d'éviter l'usage de compositions caoutchouteuses de couleur en jouant sur le contraste optique entre la composition caoutchouteuse formant la bande de roulement et une rainure ou une cavité dans cette même bande. Le document GB 1 279 966 décrit une bande de roulement pourvue de rainures de profondeurs différentes réparties sur la largeur de la bande de roulement : au fur et à mesure que le pneumatique s'use, le nombre de rainures diminue ; le nombre de rainures restantes permet de tirer des conclusions sur le taux d'usure de la bande de roulement. Le même principe a été repris dans les documents EP 0 250 113 et EP 0 853 553 ; dans ce dernier document, des cavités de profondeurs différentes sont réparties tout autour de la circonférence du pneumatique. Cette approche se distingue par sa facilité de mise en œuvre, mais elle a un inconvénient majeur : le nombre de rainures ou cavités présentes sur la surface de roulement à un moment donné de la vie du pneumatique ne donne pas une information précise du taux d'usure. Autrement dit, l'utilisateur perçoit visuellement l'état d'avancement de l'usure, mais, à moins de disposer de renseignements sur la géométrie de la bande de roulement à l'état initial et final, il ne sait pas où la bande de roulement se situe dans son « cycle de vie ».

Deux voies ont été proposées pour surmonter cette difficulté :
Le document US 2002/0036039 prévoit un indicateur d'usure comprenant deux cavités de même profondeur mais ayant une géométrie différente. La section de l'une des deux cavités dans la surface de roulement diminue au fur et à mesure que le pneumatique s'use, alors que la section de la deuxième cavité reste constante. Une comparaison des sections des deux cavités permet de déterminer le taux d'usure de la bande de roulement. Cette approche a l'avantage de permettre une mesure directement « lisible » du taux d'usure de la bande de roulement ; son inconvénient réside dans le fait qu'elle implique deux cavités de forme ou d'orientation différente, ce qui augmente le taux d'entaillage de la surface de roulement et peut se traduire par la création de zones d'usure irrégulière.

Le document US 3,653,422 propose une autre voie. Une pluralité de cavités de profondeurs différentes sont combinées pour former un indicateur d'usure ; chaque cavité a une section dont la forme contribue à former un message à l'attention de l'utilisateur du pneumatique ; au fur et à mesure que le pneu s'use, le message change. US 6,523,586 exploite la même idée en associant plusieurs cavités dont chacune a une trace (dans la surface de roulement) correspondant au chiffre exprimant l'épaisseur restante (en millimètres) qu'aura la bande de roulement au moment où l'usure fera disparaître la cavité en question. Ainsi, lorsque une bande de roulement ayant une épaisseur initiale de 10 mm est réduite à une épaisseur de 6 mm par usure, l'indicateur d'usure, initialement composé de neuf cavités formant les chiffres 1 à 9, comporte encore cinq cavités ayant une section, dans la surface de roulement, correspondant aux chiffres 1 à 5. Cette solution a l'avantage de permettre l'affichage, en valeurs absolues, de l'épaisseur de la bande de roulement restante, mais elle comporte toutefois certains inconvénients. Premièrement, elle nécessite un grand nombre de cavités, notamment si on veut déterminer le taux d'usure à plusieurs positions sur la largeur et sur la périphérie de la bande de roulement. Deuxièmement, l'utilisateur peut être troublé par le fait que plusieurs valeurs sont affichées en même temps et qu'il ne faut retenir que la valeur la plus importante (dans l'exemple cité plus haut, lorsque l'épaisseur restante est de 5 mm, les chiffres 1 à 5 apparaissent sur la surface de roulement). Enfin, elle est liée à un système de mesures particulier (le système métrique dans l'exemple) et nécessite une adaptation pour des régions où les utilisateurs ne sont pas familiers avec ce système.

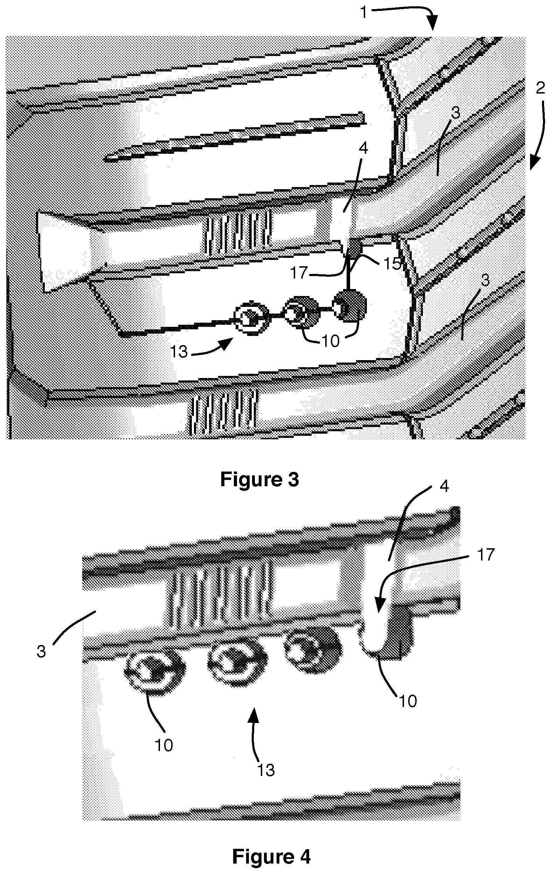

Plus récemment, un autre indicateur permettant de détecter le moment où les pneumatiques d'un véhicule doivent être intervertis a été proposé. Le document EP 1 574 363 décrit un indicateur formé par une cavité dont la trace sur la surface de roulement est modifiée en fonction du taux d'usure de la bande de roulement. Lorsqu'un certain seuil d'usure est franchi, la trace change radicalement de forme, par exemple d'une forme circulaire vers une forme carrée ou vice versa. Un tel indicateur a l'avantage de signaler de façon visible l'atteinte de certains seuils d'usure, mais il comporte la difficulté d'identifier le taux d'usure au moment de l'observation. L'utilisateur doit consulter une référence pour savoir quel taux d'usure est atteint, notamment lorsque l'indicateur permet de distinguer plusieurs états d'usure (comme celui de la Figure 3(h) du document cité).

**Le** document US 2006/037683 divulgue une bande de roulement comportant une surface de roulement et plusieurs indicateurs d'usure formés par plusieurs cavités débouchant sur la surface de roulement, la forme géométrique de la trace des cavités sur la surface de roulement étant modifiée en fonction du taux d'usure de la bande de roulement. Chaque indicateur d'usure comporte une série de portions empilées dont chacune a une configuration qui indique de manière visible l'épaisseur de la bande de roulement, les portions ayant chacune une configuration différente.

Enfin, le document US 2006/213594 divulgue une bande de roulement comportant une surface de roulement et au moins un indicateur d'usure formé par au moins une cavité débouchant sur la surface de roulement, la forme géométrique de la trace de la cavité sur la surface de roulement étant modifiée en fonction du taux d'usure de la bande de roulement La forme géométrique de la trace est une expression analogique du taux d'usure de la bande de roulement et l'aire de la trace change en fonction du taux d'usure de la bande de roulement.

La forme de la trace est une «expression analogique» du taux d'usure de la bande de roulement lorsque cette forme exprime à elle seule et directement le taux d'usure, sans qu'il soit indispensable d'introduire une autre référence. En d'autres termes, un indicateur pour lequel la forme géométrique de ladite trace est une expression analogique du taux d'usure de la bande de roulement permet à l'utilisateur de connaître le taux d'usure « en un coup d'œil », sans se référer à autre chose ; il est en quelque sorte auto-explicatif.

En cela, un indicateur US 2006/213594 se distingue, par exemple, d'un indicateur tel que décrit dans EP 1 574 363 où la forme géométrique de la trace en elle-même ne permet pas de connaître le taux d'usure. Ce n'est qu'en consultant un document de référence que l'utilisateur peut identifier le taux d'usure. A titre d'exemple, l'indicateur peut être dimensionné de façon à ce qu'il adopte une géométrie triangulaire à un taux d'usure de 80 %, mais ce taux d'usure ne découle pas d'une manière évidente de la géométrie triangulaire en tant que telle.

L'indicateur divulgué dans US 6,523,586 ne permet pas non plus d'obtenir une expression analogique du taux d'usure, dans la mesure où l'indication de l'épaisseur restante ne permet pas à l'utilisateur de connaître le taux d'usure s'il ne dispose pas par ailleurs de l'épaisseur totale à user. Le même constat se vérifie encore pour l'indicateur d'usure qu'enseigne le document EP 0 250 113, car si un tel indicateur permet d'illustrer l'avancement de l'usure et de signaler qu'un seuil est atteint, l'utilisateur ne peut pas connaître directement le taux d'usure. Pour cela, il doit connaître le nombre d'incisions et leur répartition en fonction de l'épaisseur résiduelle de la bande de roulement.

Le document EP 1 574 363 décrit un pneumatique comportant un orifice d'indication d'usure comportant plusieurs niveaux d'usure et des contours différents selon le niveau d'usure. La superposition de profils distincts n'est cependant pas aisée à réaliser et le moule correspondant est complexe et coûteux.

L'indicateur de US 2002/0036039 se rapproche d'une expression analogique du taux d'usure, dans la mesure où la comparaison de la surface de deux cavités dont l'une seulement change en fonction du taux d'usure permet d'estimer le taux d'usure. Ce type d'indicateur présente néanmoins l'inconvénient de nécessiter une comparaison optique de deux surfaces alors que cette opération mentale n'est pas nécessaire dans le cas d'un indicateur selon le document US 2006/213594.

Ce dernier document enseigne notamment un mode de réalisation particulier dans lequel la trace de la cavité sur la surface de roulement comprend une surface portante et une pluralité de parties connectées à et faisant saillie sur la surface portante, le nombre des parties faisant saillie étant une fonction du taux d'usure de la bande de roulement.

**Ce** mode de réalisation constitue un indicateur d'usure simple, permettant de déterminer le taux d'usure en un clin d'œil et occupant une surface très limitée de la surface de roulement. Il comporte néanmoins l'inconvénient que la simple inspection visuelle de l'indicateur d'usure ne permet pas de déterminer l'évolution que connaîtra la trace de l'indicateur d'usure sur la surface de roulement, en fonction du taux d'usure de la bande de roulement.

Malgré la grande diversité d'indicateurs d'usure de toutes sortes, il subsiste toujours un besoin pour un indicateur simple, fiable, peu complexe à mettre en œuvre, et facile d'utilisation pour tout type d'utilisateurs.

### EXPOSE DE L'INVENTION

Tout d'abord, un premier objectif de l'invention consiste à faciliter la vérification du suivi du taux d'usure de la bande de roulement d'un pneumatique.

Encore un objectif de l'invention consiste à prévoir un pneumatique agencé pour faciliter l'identification ou la localisation des témoins d'usure de la bande de roulement.

Pour ce faire, l'invention prévoit un pneumatique comprenant une bande de roulement, au moins une rainure, au moins un témoin d'usure disposé dans la rainure, et comprenant par ailleurs au moins un indicateur d'usure, l'indicateur d'usure comportant au moins deux parties coaxiales, une partie radialement intérieure et une partie radialement extérieure agencée dans le prolongement de la partie radialement intérieure, la section (ou surface) de la partie radialement extérieure étant supérieure d'au moins 30% à la section (ou surface) de la partie radialement intérieure.

Par rapport au témoin d'usure, l'évolution de l'indicateur d'usure est plus simple à constater pour un utilisateur non spécialisé et lui permet d'obtenir une information dynamique et évolutive en fonction de l'usure effective.

De manière avantageuse, la section de la partie radialement extérieure est au moins deux fois supérieure à la section de la partie radialement intérieure. Cette importante différence de dimension permet de bien distinguer les deux parties l'une de l'autre.

Egalement de manière avantageuse, le profil défini par une tranche d'une section radialement intérieure et le profil défini par une tranche d'une section radialement extérieure sont identiques.

La continuité de forme d'une section à l'autre facilite la fabrication, en particulier le moulage et la mise en œuvre de l'indicateur d'usure. Par ailleurs, son homogénéité de forme rend plus aisée la lecture de l'indicateur d'usure.

De manière avantageuse, la partie radialement extérieure comporte un profil conique. Le profil de la partie radialement extérieure est évolutif en fonction de la position radiale le long du profil. Cet aspect présente un avantage au niveau de la fabrication car ce type de profil est plus facile à démouler. De plus, les impuretés et/ou cailloux sont expulsés plus facilement grâce à cette forme conique.

Selon un mode de réalisation avantageux, la partie radialement intérieure comporte un profil cylindrique. La forme cylindrique est avantageuse pour la faible surface de cette partie, en particulier pour la réalisation du moule.

De manière avantageuse, le pneumatique comporte au moins deux indicateurs d'usure, et plus préférentiellement trois indicateurs d'usure à proximité immédiate l'un de l'autre, formant une série d'indicateurs d'usure. Le fait d'avoir une série d'indicateurs d'usure permet de fournir à l'utilisateur une indication progressive visuelle du niveau d'usure. Cette indication est facilement compréhensible et interprétable par tout type d'utilisateurs. L'utilisateur peut constater une usure effective et anticiper le moment où il devra changer ses pneus grâce à ce dispositif.

Egalement de manière avantageuse, pour une série d'indicateurs, la profondeur P de la partie radialement extérieure varie progressivement entre l'indicateur le plus axialement extérieur en allant vers l'indicateur le plus axialement intérieur. L'utilisateur peut donc constater l'usure puis la disparition progressive de l'indicateur d'usure le moins profond jusqu'au plus profond. De ce fait, il obtient un suivi de l'usure de la bande de roulement du pneumatique en fonction du temps. Par conséquent, il peut gérer plus facilement et même anticiper le moment du changement de pneus.

Selon un mode de réalisation avantageux, la partie radialement extérieure ayant la profondeur P la plus importante est celle située axialement la plus à l'intérieur.

Selon un autre mode de réalisation avantageux, les indicateurs d'usure sont reliés par une incision.

Selon un autre mode de réalisation avantageux, pour une série d'indicateurs, la profondeur de l'incision varie suivant la profondeur des parties radialement extérieures. Le profil des incisions évolue progressivement comme la profondeur des parties radialement extérieures.

Selon un mode de réalisation avantageux, une série d'indicateurs forme un alignement dont le prolongement passe par un témoin d'usure situé dans une rainure voisine. Cette configuration est un moyen aisé voire ludique pour mieux repérer les témoins d'usure qui peuvent parfois être peu discernables selon les conditions d'éclairage et la présence de salissures.

Selon encore un mode de réalisation avantageux, un indicateur d'usure est agencé au voisinage d'un témoin d'usure situé dans une rainure voisine. L'indicateur d'usure, aisément visible par l'utilisateur, permet à ce dernier de plus facilement localiser le témoin d'usure disposé à proximité.

Selon un mode de réalisation avantageux, une découpure entourant partiellement l'indicateur d'usure situé à proximité est agencée à proximité de l'indicateur d'usure le plus axialement extérieur.

Une telle découpure peut par exemple être en forme d'arc de cercle. Cette découpure permet de repérer plus facilement une série d'indicateurs d'usure et de ce fait, de localiser d'autant plus facilement les témoins d'usure. En plus de faciliter la localisation de l'indicateur d'usure, cet agencement permet de déceler le cas où l'indicateur à proximité immédiate serait déjà usé.

Egalement de manière avantageuse, au moins un indicateur d'usure est situé à proximité d'une rainure et comporte une ouverture latérale partielle communiquant avec cette rainure. Une telle ouverture latérale partielle communique avantageusement avec un témoin d'usure situé dans la rainure. Un tel agencement facilite grandement la localisation des témoins d'usure.

### DESCRIPTION DES FIGURES

Tous les détails de réalisation sont donnés dans la description qui suit, complétée par les figures 1 à 4, présentées uniquement à des fins d'exemples non limitatifs, et dans lesquelles :
- la figure 1 est une représentation schématique en perspective d'une série d'indicateurs d'usure selon l'invention : ces éléments étant mis en œuvre sous forme d'ouvertures ou creusures, la représentation de la figure 1 correspond au « négatif » des parties représentées à la figure 2 ;
- la figure 2 est une vue partielle d'une bande de roulement d'un pneumatique avec un exemple de réalisation d'une série d'indicateurs d'usure formant un alignement sensiblement perpendiculaire à la rainure voisine;
- la figure 3 est une variante de réalisation d'une bande de roulement également pourvue d'un exemple de réalisation d'une série d'indicateurs d'usure formant un alignement au moins en partie sensiblement parallèle à la rainure voisine;
- la figure 4 est une variante de réalisation d'une bande de roulement également pourvue d'un exemple de réalisation d'une série d'indicateurs d'usure agencés en bordure de rainure et avec au moins un indicateur pourvu d'une ouverture latérale vers la rainure.

### DESCRIPTION DETAILLEE DE L'INVENTION

### DEFINITIONS

Par « pneumatique », on entend tous les types de bandages élastiques soumis à une pression interne ou non.

Par « matériau caoutchoutique », on entend un élastomère diénique, c'est-à-dire de manière connue un élastomère issu d'au moins en partie (c'est-à-dire homopolymère ou un copolymère) de monomères diènes (monomères porteurs de deux doubles liaisons carbone-carbone, conjuguées ou non).

Par « bande de roulement » d'un pneumatique, on entend une quantité de matériau caoutchoutique délimitée par des surfaces latérales et par deux surfaces principales dont l'une, appelée surface de roulement, est destinée à entrer en contact avec une chaussée lorsque le pneumatique roule.

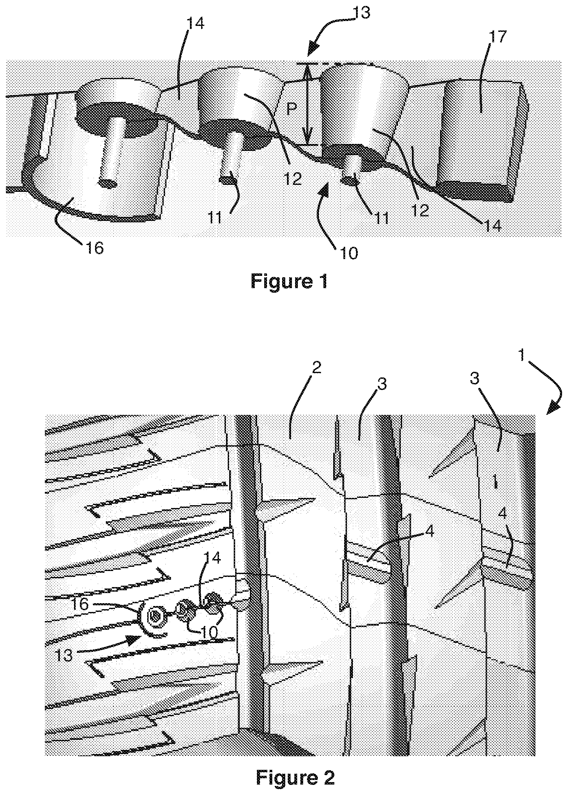

Les figures 1 et 2 montrent une représentation schématique d'un exemple de réalisation d'indicateurs d'usure 10. Pour faciliter la description et la visualisation des témoins d'usure, la figure 1 est prévue sous la forme d'une représentation d'un négatif d'image de zones vides constituant les indicateurs d'usure 10. La figure 2 illustre une portion d'un exemple de bande de roulement 2 d'un pneumatique 1 comportant des indicateurs tels que ceux schématisés à la figure 1. La bande de roulement comprend également des rainures 3 agencées circonférentiellement. Un ou des témoins d'usure 4 sont prévus dans les rainures 3.

Chaque indicateur d'usure 10 est constitué de deux parties coaxiales, soit une partie radialement intérieure 11 et une autre partie radialement extérieure 12. Le diamètre de la partie radialement extérieure 12 est supérieur au diamètre de la partie radialement intérieure 11. L'écart entre les deux parties 11 et 12 est tel que la surface de la partie radialement extérieure 12 est supérieure d'au moins 30%, et plus préférentiellement d'au moins 100%, par rapport à la surface de la partie radialement intérieure 11. On entend par là qu'au moins une tranche du profil de la partie radialement extérieure 12, cette tranche étant perpendiculaire à l'axe de la partie considérée, respecte ces proportions. De préférence, l'ensemble de la partie radialement 12 extérieure respecte ces proportions.

Dans les exemples de réalisation illustrés, le profil défini par une tranche d'une partie radialement intérieure 11 et le profil défini par une tranche d'une partie radialement extérieure 12 sont identiques. Cependant les profils des deux parties ne sont pas forcément identiques. Par exemple, tel qu'illustré, la partie radialement extérieure 12 comporte un profil conique, et la partie radialement intérieure 11 comporte un profil cylindrique. D'autres types de profils sont également possibles pour chacune des deux parties 11 et 12. De ce fait, les combinaisons de profils sont particulièrement nombreuses. Le profil tronconique de la partie radialement extérieure 12 est particulièrement avantageux pour permettre à l'utilisateur de suivre dynamiquement l'évolution de l'usure de la bande de roulement 2 du pneumatique.

Dans les exemples illustrés, trois témoins d'usure 10 sont agencés côte à côte et forment une série d'indicateurs d'usure. La profondeur P de la partie radialement extérieure 12 varie progressivement entre l'indicateur le plus axialement extérieur en allant vers l'indicateur le plus axialement intérieur. La variation de profondeur confère un autre moyen à l'utilisateur de suivre dans le temps l'évolution du niveau d'usure. La présence d'une pluralité d'indicateurs en série permet aussi de faciliter leur repérage sur la bande de roulement.

Dans les exemples illustrés, la partie radialement extérieure 12 ayant la profondeur P la plus importante est celle située axialement la plus à l'intérieur.

Tel que montré dans l'exemple de réalisation de la figure 2, une série d'indicateurs forme avantageusement un alignement 13 dont le prolongement passe par un témoin d'usure 4 situé dans une rainure 3 voisine. L'utilisateur peut alors aisément localiser un témoin d'usure 4, alors que le même témoin sans l'alignement 13 aurait été moins facilement discernable. En effet, le fait que les témoins d'usure 4 soient agencés dans les rainures, plutôt vers la zone centrale de la bande de roulement, les rend souvent difficiles à identifier pour les utilisateurs non avertis. Les conditions d'éclairage, la position angulaire des roues et les salissures présentes réduisent d'autant leur visibilité.

Egalement dans les exemples illustrés, les indicateurs d'usure 10 sont reliés entre eux par une incision 14. La profondeur de cette incision est prévue de façon à suivre celle des parties radialement extérieures 12. Cet aspect est bien visible sur la figure 1. L'alignement 13 d'indicateurs 10 et l'incision 14 qui les relie forment ainsi un ensemble dont la profondeur évolue de façon progressive et harmonieuse.

A proximité de l'indicateur d'usure 10 le plus axialement extérieur, une découpure, par exemple en forme d'arc de cercle 16 est agencée. Cette découpure entoure au moins partiellement un des indicateurs d'usure.

La figure 3 illustre un autre exemple de réalisation d'une bande de roulement 2 de pneumatique 1. Les rainures 3 de cette bande de roulement sont agencées principalement dans le sens sensiblement radial. Un témoin d'usure 4 est positionné au voisinage d'un des indicateurs d'usure 10. Tel qu'illustré, l'indicateur d'usure voisin de la rainure comporte une ouverture latérale 17 ouvrant l'indicateur sur le témoin d'usure. Le fond de la partie radialement extérieure 12 de cet indicateur d'usure est aligné avec la surface du témoin d'usure, faisant en sorte que le témoin 4 d'usure se prolonge dans l'indicateur d'usure 10. Cette continuité permet à l'utilisateur de mieux suivre l'évolution de l'usure, en relation avec les indicateurs d'usure 10 et avec le témoin d'usure 4.

Une incision transversale 15 relie l'indicateur voisin de la rainure avec l'alignement 13 de façon à former un alignement avec un angle, pointant vers le témoin d'usure.

La figure 4 illustre une variante de réalisation dans laquelle plusieurs témoins d'usure 10 sont disposés au voisinage d'une rainure 3. Un ou plusieurs des témoins comportent une ouverture latérale 17 vers la rainure. Le dernier indicateur d'usure de l'alignement communique avec le témoin d'usure. En variante, tel qu'illustré sur cette figure, l'indicateur d'usure 10 voisin du témoin d'usure 4 comprend uniquement une partie radialement extérieure, et pas de partie radialement intérieure de façon à bien créer une jonction continue avec le témoin d'usure 4.

### Numéros de référence employés sur les figures

- 1: Pneumatique
- 2: Bande de roulement
- 3: Rainure
- 4: Témoin d'usure
- 10: Indicateur d'usure
- 11: Partie radialement intérieure
- 12: Partie radialement extérieure
- 13: Alignement d'indicateurs d'usure
- 14: Incision
- 15: Incision transversale
- 16: Découpure entourant partiellement un indicateur d'usure
- 17: Ouverture sur rainure d'indicateur d'usure

## Revendications

1. Pneumatique (1) comprenant une bande de roulement (2), au moins une rainure (3), au moins un témoin d'usure (4) disposé dans la rainure (3), et comprenant par ailleurs au moins un indicateur d'usure (10), **caractérisé en ce que** l'indicateur d'usure (10) comporte au moins deux parties coaxiales, une partie radialement intérieure (11) et une partie radialement extérieure (12) agencée dans le prolongement de la partie radialement intérieure (11), la section de la partie radialement extérieure (12) étant supérieure d'au moins 30% à la section de la partie radialement intérieure (11).

2. Pneumatique selon la revendication 1, dans lequel la section de la partie radialement extérieure (12) est au moins deux fois supérieure à la section de la partie radialement intérieure (11).

3. Pneumatique selon l'une quelconque des revendications 1 ou 2, dans lequel le profil défini par une tranche d'une section radialement intérieure (11) et le profil défini par une tranche d'une section radialement extérieure (12) sont identiques.

4. Pneumatique selon l'une quelconque des revendications 1 à 3, dans lequel la partie radialement supérieure (12) comporte un profil conique.

5. Pneumatique selon l'une quelconque des revendications 1 à 4, dans lequel la partie radialement intérieure (11) comporte un profil cylindrique.

6. Pneumatique selon l'une quelconque des revendications précédentes, comportant au moins deux indicateurs d'usure (10), et plus préférentiellement trois indicateurs d'usure (10) à proximité immédiate l'un de l'autre, formant une série d'indicateurs d'usure.

7. Pneumatique selon la revendication 6, dans lequel pour une série d'indicateurs, la profondeur P de la partie radialement extérieure (12) varie progressivement entre l'indicateur le plus axialement extérieur en allant vers l'indicateur le plus axialement intérieur.

8. Pneumatique selon la revendication 7, dans lequel la partie radialement extérieure (12) ayant la profondeur P la plus importante est celle située axialement la plus à l'intérieur.

9. Pneumatique selon l'une quelconque des revendications précédentes, dans lequel les indicateurs d'usure (10) sont reliés par une incision (14, 15).

10. Pneumatique selon la revendication 9, dans lequel pour une série d'indicateurs, la profondeur de l'incision (14) varie suivant la profondeur des parties radialement extérieures (12).

11. Pneumatique selon l'une quelconque des revendications 6 à 10, dans lequel une série d'indicateurs forme un alignement (13) dont le prolongement passe par un témoin d'usure (4) situé dans une rainure (3) voisine.

12. Pneumatique selon l'une quelconque des revendications 1 à 10, dans lequel un indicateur d'usure (10) est agencé au voisinage d'un témoin d'usure (4) situé dans une rainure (3) voisine.

13. Pneumatique selon l'une quelconque des revendications précédentes, dans lequel une découpure (16) entourant partiellement l'indicateur d'usure (10) situé à proximité est agencée à proximité de l'indicateur d'usure (10) le plus axialement extérieur.

14. Pneumatique selon l'une quelconque des revendications précédentes, dans lequel au moins un indicateur d'usure (10) est situé à proximité d'une rainure (3) et comporte une ouverture latérale partielle (17) communiquant avec cette rainure.

15. Pneumatique selon la revendication 14, dans lequel l'ouverture latérale partielle (17) communique avec un témoin d'usure (4) situé dans la rainure (3).

## Patentansprüche

1. Reifen (1), welcher einen Laufstreifen (2), wenigstens eine Rille (3) und wenigstens eine in der Rille (3) angeordnete Verschleißmarkierung (4) umfasst und außerdem wenigstens einen Verschleißanzeiger (10) umfasst, **dadurch gekennzeichnet, dass** der Verschleißanzeiger (10) wenigstens zwei koaxiale Teile aufweist, einen radial inneren Teil (11) und einen in der Verlängerung des radial inneren Teils (11) angeordneten radial äußeren Teil (12), wobei der Querschnitt des radial äußeren Teils (12) um wenigstens 30 % größer als der Querschnitt des radial inneren Teils (11) ist.

2. Reifen nach Anspruch 1, wobei der Querschnitt des radial äußeren Teils (12) mindestens doppelt so groß wie der Querschnitt des radial inneren Teils (11) ist.

3. Reifen nach einem der Ansprüche 1 oder 2, wobei das Profil, das durch einen Schnitt eines radial inneren Abschnitts (11) definiert ist, und das Profil, das durch einen Schnitt eines radial äußeren Abschnitts (12) definiert ist, identisch sind.

4. Reifen nach einem der Ansprüche 1 bis 3, wobei der radial obere Teil (12) ein konisches Profil aufweist.

5. Reifen nach einem der Ansprüche 1 bis 4, wobei der radial innere Teil (11) ein zylindrisches Profil aufweist.

6. Reifen nach einem der vorhergehenden Ansprüche, welcher wenigstens zwei Verschleißanzeiger (10) und, stärker bevorzugt, drei Verschleißanzeiger (10) in unmittelbarer Nähe zueinander aufweist, die eine Reihe von Verschleißanzeigern bilden.

7. Reifen nach Anspruch 6, wobei für eine Reihe von Anzeigern die Tiefe P des radial äußeren Teils (12) vom axial äußersten Anzeiger zum axial innersten Anzeiger hin sich fortschreitend ändert.

8. Reifen nach Anspruch 7, wobei der radial äußere Teil (12), der die größte Tiefe P aufweist, derjenige ist, der sich axial am weitesten innen befindet.

9. Reifen nach einem der vorhergehenden Ansprüche, wobei die Verschleißanzeiger (10) durch einen Einschnitt (14, 15) verbunden sind.

10. Reifen nach Anspruch 9, wobei für eine Reihe von Anzeigern die Tiefe des Einschnitts (14) sich je nach der Tiefe der radial äußeren Teile (12) ändert.

11. Reifen nach einem der Ansprüche 6 bis 10, wobei eine Reihe von Anzeigern eine Reihenanordnung (13) bildet, deren Verlängerung durch eine Verschleißmarkierung (4) verläuft, die sich in einer benachbarten Rille (3) befindet.

12. Reifen nach einem der Ansprüche 1 bis 10, wobei ein Verschleißanzeiger (10) benachbart zu einer Verschleißmarkierung (4) angeordnet ist, die sich in einer benachbarten Rille (3) befindet.

13. Reifen nach einem der vorhergehenden Ansprüche, wobei ein Ausschnitt (16), der den Verschleißanzeiger (10), der sich in der Nähe befindet, teilweise umgibt, in der Nähe des axial äußersten Verschleißanzeigers (10) angeordnet ist.

14. Reifen nach einem der vorhergehenden Ansprüche, wobei sich wenigstens ein Verschleißanzeiger (10) in der Nähe einer Rille (3) befindet und eine teilweise seitliche Öffnung (17) aufweist, die mit dieser Rille in Verbindung steht.

15. Reifen nach Anspruch 14, wobei die teilweise seitliche Öffnung (17) mit einer Verschleißmarkierung (4) in Verbindung steht, die sich in der Rille (3) befindet.

## Claims

1. Tire (1) comprising a tread (2), at least one groove (3), at least one wear indicator (4) arranged in the groove (3), and further comprising at least one wear indicator (10), **characterized in that** the wear indicator (10) comprises at least two coaxial parts, a radially inner part (11) and a radially outer part (12) arranged in the extension of the radially inner part (11), the section of the radially outer part (12) being greater by at least 30% than the section of the radially inner part (11).

2. Tire according to claim 1, wherein the section of the radially outer part (12) is at least twice the section of the radially inner part (11).

3. Tire according to any one of claims 1 or 2, wherein the profile defined by a portion of a radially inner section (11) and the profile defined by a portion of a radially outer section (12) are identical.

4. Tire according to any one of claims 1 to 3, wherein the radially upper part (12) has a conical profile.

5. Tire according to any one of claims 1 to 4, wherein the radially inner part (11) comprises a cylindrical profile.

6. Tire according to any one of the preceding claims, comprising at least two wear indicators (10), and more preferably three wear indicators (10) in close proximity to one another, forming a series of indicators wear.

7. Tire according to claim 6, wherein for a series of indicators, the depth P of the radially outer part (12) varies progressively from the most axially outer indicator towards the most axially inner indicator.

8. Tire according to Claim 7, wherein the radially outer part (12) having the greatest depth P is that situated axially innermost.

9. Tire according to any one of the preceding claims, wherein the wear indicators (10) are connected by an incision (14, 15).

10. Tire according to claim 9, wherein for a series of indicators the depth of the incision (14) varies according to the depth of the radially outer portions (12).

11. Tire according to any one of Claims 6 to 10, wherein a series of indicators forms an alignment (13) the extension of which passes through a wear indicator (4) located in an adjacent groove (3).

12. Tire according to any one of claims 1 to 10, wherein a wear indicator (10) is arranged in the vicinity of a wear indicator (4) located in an adjacent groove (3).

13. Tire according to any one of the preceding claims, wherein a cutout (16) partially surrounding the wear indicator (10) located in the vicinity is arranged near the wear indicator (10) outermost axially.

14. Tire according to any one of the preceding claims, wherein at least one wear indicator (10) is located near a groove (3) and has a partial lateral opening (17) communicating with this groove.

15. A tire according to Claim 14, wherein the partial lateral opening (17) communicates with a wear indicator (4) located in the groove (3).
